(19) **Europäisches Patentamt / European Patent Office / Office européen des brevets**

(11) **EP 4 614 007 A1**

(12) # EUROPÄISCHE PATENTANMELDUNG

(43) Veröffentlichungstag:
    **10.09.2025   Patentblatt 2025/37**

(21) Anmeldenummer: **24161858.6**

(22) Anmeldetag: **06.03.2024**

(51) Internationale Patentklassifikation (IPC):
    **F15B 1/08** (2006.01)        **F15B 19/00** (2006.01)
    **F15B 1/033** (2006.01)

(52) Gemeinsame Patentklassifikation (CPC):
    **F15B 1/033; F15B 19/005;** F15B 2201/205;
    F15B 2201/51; F15B 2211/20546; F15B 2211/212;
    F15B 2211/40507; F15B 2211/415;
    F15B 2211/41509; F15B 2211/6306;
    F15B 2211/6309; F15B 2211/6333

(84) Benannte Vertragsstaaten:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Benannte Erstreckungsstaaten:
    **BA**
    Benannte Validierungsstaaten:
    **GE KH MA MD TN**

(71) Anmelder: **Deere & Company**
    **Moline, IL 61265 (US)**

(72) Erfinder:
    • **BROCKE, STEFAN**
      **68163 Mannheim (DE)**
    • **FRITZ, NORBERT**
      **68163 Mannheim (DE)**

(74) Vertreter: **Dehnhardt, Florian Christopher**
    **John Deere GmbH & Co. KG**
    **Global Intellectual Property Services**
    **John-Deere-Straße 70**
    **68163 Mannheim (DE)**

(54) ## VERFAHREN ZUR ZUSTANDSÜBERPRÜFUNG EINES HYDROSPEICHERS

(57)    Bei einem Verfahren zur Zustandsüberprüfung eines Hydrospeichers (14), der eine entgegen der Wirkung eines Kompressionsmittels (30) druckvorspannbare Flüssigkeitskammer (32) zur reversiblen Speicherung hydraulischer Energie aufweist, erfolgt eine Bewertung eines Ladevorgangs des Hydrospeichers (14) durch Befüllen der Flüssigkeitskammer (32) mit unter Druck stehender Hydraulikflüssigkeit dahingehend, ob eine vorgegebene Mindest-Ladeenergie erreicht wird oder ob eine für einen spezifikationsgemäßen Betrieb des Hydrospeichers (14) vorgegebene Ladedruckkennlinie eingehalten wird, um bei insofern auftretenden Abweichungen auf eine Fehlfunktion des Hydrospeichers (14) zu schließen.

FIG. 2

EP 4 614 007 A1

**Beschreibung**

Derartige Hydrospeicher dienen unter anderem in land- und forstwirtschaftlichen Fahrzeugen der redundanten Absicherung der Hydraulikversorgung kritischer hydraulischer Funktionen, wie beispielsweise einer hydraulischen Bremsanlage oder einer hydrostatischen Fahrzeuglenkung, insbesondere für den Fall einer Funktionsbeeinträchtigung einer zur Hydraulikversorgung vorgesehenen Hochdruckpumpe, bei der es sich im Allgemeinen um eine aus einem Hydraulikreservoir gespeiste Verschwenkpumpe handelt. Hydrospeicher sind in verschiedenen Ausführungen bekannt, grundsätzlich weisen diese jedoch eine entgegen der Wirkung eines Kompressionsmittels druckvorspannbare Flüssigkeitskammer auf, die der reversiblen Speicherung hydraulischer Energie dient. So kann der Hydrospeicher als Membranspeicher ausgebildet sein, bei dem das Kompressionsmittel durch eine elastische Membran aus Metall oder einem Elastomer gebildet ist, die sich beim Befüllen der Flüssigkeitskammer entgegen der rückstellenden Wirkung eines kompressiblen Gases, meist Stickstoff, auslenken lässt. Anstelle eines Membranspeichers kann es sich auch um einen Blasenspeicher oder einen Kolbenspeicher handeln. Bei letzterem kann das Kompressionsmittel durch einen mechanisch federvorgespannten Druckkolben gebildet sein.

Wird der Hydrospeicher zur redundanten Absicherung der Hydraulikversorgung kritischer hydraulischer Funktionen verwendet, so werden an dessen Ausfallsicherheit erhöhte Anforderungen gestellt. Bei einem defektbedingten Funktionsverlust des Kompressionsmittels (z.B. aufgrund eines leckagebedingten Austritts des kompressiblen Gases oder eines Defekts einer zur Erzeugung der mechanischen Federvorspannung vorhandenen Spiralfeder) kann diese beeinträchtigt sein.

Es ist daher Aufgabe der vorliegenden Erfindung, ein Verfahren zur Zustandsüberprüfung eines Hydrospeichers anzugeben, mittels dessen eine Degradation der Energiespeicherkapazität des Hydrospeichers frühzeitig und verlässlich erkennbar ist.

Diese Aufgabe wird durch ein Verfahren zur Zustandsüberprüfung eines Hydrospeichers mit den Merkmalen des Patentanspruchs 1 gelöst.

Bei dem erfindungsgemäßen Verfahren zur Zustandsüberprüfung eines Hydrospeichers weist der Hydrospeicher eine entgegen der rückstellenden Wirkung eines Kompressionsmittels druckvorspannbare Flüssigkeitskammer zur reversiblen Speicherung hydraulischer Energie auf, wobei vorgesehen ist, dass die Flüssigkeitskammer während eines Ladevorgangs des Hydrospeichers auf Veranlassung einer Kontrolleinheit

(i) bis zum Erreichen eines vorgegebenen Soll-Ladedrucks p_target mit unter Druck stehender Hydraulikflüssigkeit befüllt wird, wobei die beim Befüllen aufgewandte Ladeenergie E_a von der Kontrolleinheit durch zeitliche Integration des Produkts aus sensorisch erfasstem Ladedruck p_a und Ladevolumenstrom V_flow berechnet und mit einer vorgegebenen Mindest-Ladeenergie min_E_a verglichen wird, um bei Nichterreichen der vorgegebenen Mindest-Ladeenergie min_E_a auf eine Fehlfunktion des Hydrospeichers zu schließen, und/oder

(ii) für ein vorgegebenes Füllzeitintervall [t1, t2] mit unter Druck stehender Hydraulikflüssigkeit befüllt wird, wobei

eine dabei auftretende Druckdifferenz delta p_a in der Flüssigkeitskammer im Verhältnis zu einem zugeführten Ladevolumen delta V_a sensorisch erfasst und von der Kontrolleinheit hinsichtlich der Übereinstimmung mit einer für einen spezifikationsgemäßen Betrieb des Hydrospeichers vorgegebenen Ladedruckkennlinie p_a(V_a) verglichen wird, um bei mangelnder Übereinstimmung auf eine Fehlfunktion des Hydrospeichers zu schließen.

Der Ladevorgang erfolgt bevorzugt mit Inbetriebnahme eines mit dem Hydrospeicher ausgestatteten land- oder forstwirtschaftlichen Fahrzeugs, wobei es jede der beiden Vorgehensweisen (i) und (ii) auf unterschiedlichen Wegen erlaubt, eine Degradation der Energiespeicherkapazität des Hydrospeichers frühzeitig und verlässlich zu erkennen.

Bei dem Hydrospeicher kann es sich um einen Membranspeicher handeln, bei dem das Kompressionsmittel durch eine elastische Membran aus Metall oder einem Elastomer gebildet ist, die sich beim Befüllen der Flüssigkeitskammer entgegen der rückstellenden Wirkung eines kompressiblen Gases, meist Stickstoff, auslenken lässt. Es sei jedoch angemerkt, dass der Hydrospeicher von beliebiger Bauart sein kann, so kommt ebenso gut auch eine Ausbildung als Blasenspeicher oder Kolbenspeicher in Frage. Deren Aufbau ist hinlänglich bekannt, sodass an dieser Stelle auf weitergehende Ausführungen verzichtet werden soll.

Ob der vorgegebene Soll-Ladedruck p_target im Falle der ersten Vorgehensweise (i) erreicht ist, erkennt die Kontrolleinheit durch Überwachung des Ladedrucks p_a, der mittels eines mit der Flüssigkeitskammer des Hydrospeichers kommunizierenden Drucksensors erfasst wird. Die beim Befüllen aufgewandte Ladeenergie E_a ergibt sich dabei zu

$$E\_a = \int_{t1}^{t2} p\_a * V\_flow * dt \ ,$$

wobei eine zeitliche Integration über das Füllzeitintervall [t1, t2] durchgeführt wird.

Im Falle der zweiten Vorgehensweise (ii) wird von der Kontrolleinheit hingegen eine Bewertung dahingehend vorgenommen, ob sich das ermittelte Wertepaar (delta p_a, delta V_a) innerhalb eines zulässigen Toleranzbereichs Δ p_a(V_a) entlang der vorgegebenen Ladedruckkennlinie p_a(V_a) einordnen lässt. Ist dies der Fall, so ist von einer ordnungsgemäßen Funktion des Hydrospeichers auszugehen. Das zugeführte Ladevolumen delta V_a ergibt sich hierbei aus der Dauer der Füllzeit t2-t1 bei als bekannt vorausgesetzten und für eine gegebene Betriebstemperatur der Hydraulikflüssigkeit als konstant angenommenen Ladevolumenstrom V_flow.

Die vorgegebene Mindest-Ladeenergie min_E_a bzw. die vorgegebene Ladedruckkennlinie p_a(V_a) ist je nach verwendetem Hydrospeicher unterschiedlich und ergibt sich letztlich aus den jeweiligen Spezifikationen des Herstellers.

Vorteilhafte Weiterbildungen des erfindungsgemäßen Verfahrens gehen aus den Unteransprüchen hervor.

Bevorzugt wird die unter Druck stehende Hydraulikflüssigkeit mittels einer aus einem Hydraulikreservoir gespeisten Verschwenkpumpe erzeugt. Die Verschwenkpumpe kann Bestandteil eines in einem land- oder forstwirtschaftlichen Fahrzeug angeordneten Hydrauliksystems sein und dort der Hydraulikversorgung einer Vielzahl von hydraulischen Verbrauchern dienen. Typischerweise wird die Verschwenkpumpe über einen Zahnradantrieb mittels eines von dem Fahrzeug umfassten Verbrennungsmotors in Drehung versetzt, dieser kann jedoch auch ein separater Antrieb in Form eines Elektromotors zugeordnet sein.

Hierbei besteht die Möglichkeit, dass der Ladevolumenstrom V_flow von der Kontrolleinheit ausgehend von einer sensorisch erfassten Pumpendrehzahl N1 nach Maßgabe eines sich aus einem sensorisch erfassten Schwenkwinkel β ergebenden Verdrängungsvolumenstroms V1 der Verschwenkpumpe pro Umdrehung berechnet wird,

$$V\_flow = N1 * V1 \ ,$$

wobei dies unter der Annahme erfolgt, dass in Richtung der hydraulischen Verbraucher abfallende Volumenstromanteile bekannt oder vernachlässigbar klein sind.

Zur sensorischen Erfassung der Pumpendrehzahl N1 bzw. des Schwenkwinkels β dient ein mit der Kontrolleinheit kommunizierender Drehzahlsensor bzw. Schwenkwinkelsensor.

Andererseits ist es auch vorstellbar, dass der Ladevolumenstrom V_flow von der Kontrolleinheit nach Maßgabe eines sensorisch erfassten Druckabfalls p_a-p_p berechnet wird, der an einer Hydraulikblende auftritt, durch die die unter Druck stehende Hydraulikflüssigkeit beim Befüllen der Flüssigkeitskammer hindurchströmt. Ist zur primären Hydraulikversorgung eine Verschwenkpumpe vorgesehen, so wird die Hydraulikblende eingangsseitig mit dem Förderdruck p_p der Verschwenkpumpe beaufschlagt, wohingegen ausgangsseitig der in der Flüssigkeitskammer des Hydrospeichers herrschende Ladedruck p_a anliegt,

$$V\_flow = (p\_p - p\_a) * k \ ,$$

wobei k eine für die betreffende Hydraulikblende charakteristische Konstante ist wobei k eine für die betreffende Hydraulikblende 54 charakteristische Konstante ist, die unter anderem von der Betriebstemperatur der hindurchtretenden Hydraulikflüssigkeit abhängt. Die Erfassung des Förderdrucks p_p erfolgt mittels eines mit einem Förderausgang der Verschwenkpumpe kommunizierenden weiteren Drucksensors.

Sofern der Hydrospeicher von einem Hydrauliksystem eines land- oder forstwirtschaftlichen Fahrzeugs umfasst ist, kann vorgesehen sein, dass die Kontrolleinheit eine Inbetriebnahme des Fahrzeugs bei erkannter Fehlfunktion des Hydrospeichers durch Eingreifen in ein Antriebsmanagementsystem unterbindet oder allenfalls mit reduzierter Fahrtgeschwindigkeit zulässt. Dies trägt vor allem Umständen Rechnung, in denen der Hydrospeicher der redundanten Absicherung der Hydraulikversorgung kritischer hydraulischer Funktionen, wie einer hydraulischen Bremsanlage oder einer hydrostatischen Fahrzeuglenkung, dient.

Mit Abschluss des Ladevorgangs kann die dem Hydrospeicher zugeführte Hydraulikflüssigkeit durch Sperren einer Ventileinrichtung in der Flüssigkeitskammer eingeschlossen werden. Die Ventileinrichtung umfasst hierzu zum Beispiel ein von der Kontrolleinheit elektrisch betätigbares 2/2-Wegeventil oder ein Rückschlagventil.

Zusätzlich kann der Hydraulikdruck der eingespeicherten Hydraulikflüssigkeit von der Kontrolleinheit hinsichtlich der Einhaltung eines vorgegebenen Mindest-Systemdrucks min_p_a überwacht werden, um bei Unterschreiten des vorgegebenen Mindest-Systemdrucks min_p_a das land- oder forstwirtschaftliche Fahrzeug in einen Notbetriebsmodus zu versetzen. Der Notbetriebsmodus kann eine Begrenzung der Fahrtgeschwindigkeit des Fahrzeugs zum Zwecke der Verwirklichung einer Schleichfahrt, die eine sichere Heimkehr auf einen Betriebshof oder in eine Werkstatt erlaubt, ebenso vorsehen wie einen vollständigen Fahrtstopp. Der Hydraulikdruck der eingespeicherten Hydraulikflüssigkeit ist in der Regel mit dem sensorisch erfassten Ladedruck p_a identisch bzw. kann aus diesem abgeleitet werden.

Bei erkannter Funktionsbeeinträchtigung oder Ausfall der primären Hydraulikversorgung des land- oder forstwirtschaftlichen Fahrzeugs besteht die Möglichkeit, dass die eingespeicherte Hydraulikflüssigkeit durch Öffnen der Ventileinrichtung bzw. eines von dieser umfassten elektrisch betätigbaren 2/2-Wegeventils zum Betrieb ausgewählter hydraulischer Verbraucher des Fahrzeugs, insbesondere einer hydraulischen Bremsanlage und/oder einer hydrostatischen Fahrzeuglenkung, herangezogen wird. Auf diese Weise bleibt die Manövrierbarkeit des Fahrzeugs zumindest für einen gewissen Zeitraum erhalten, sodass der Fahrer die Möglichkeit hat, dieses an geeigneter Stelle sicher zum Stillstand zu bringen.

Ergänzend kann bei Erkennung einer Fehlfunktion des Hydrospeichers wie auch bei einer Funktionsbeeinträchtigung oder einem Ausfall der primären Hydraulikversorgung des Fahrzeugs die Ausgabe einer geeigneten Fahrerinformation über eine mit der Kontrolleinheit in Verbindung stehende Nutzerschnittstelle erfolgen. Entsprechendes gilt für den Fall der Auslösung des Notbetriebsmodus.

Das erfindungsgemäße Verfahren wird im Folgenden anhand der beigefügten Zeichnungen näher erläutert. Es zeigen:

Fig. 1 eine schematisch dargestellte Anordnung zur Durchführung des erfindungsgemäßen Verfahrens zur Zustandsüberprüfung eines Hydrospeichers in einem landwirtschaftlichen Traktor,

Fig. 2 einen Betriebszustand der Anordnung gemäß Fig. 1 während der Durchführung eines Ladevorgangs des Hydrospeichers,

Fig. 3a eine Veranschaulichung des Ladevorgangs für den Fall, dass eine vorgegebene Mindest-Ladeenergie min_E_a erreicht wird,

Fig. 3b eine Veranschaulichung des Ladevorgangs für den Fall, dass die vorgegebene Mindest-Ladeenergie min_E_a nicht erreicht wird,

Fig. 4a ein für die Durchführung des Ladevorgangs vorgegebenes Füllzeitintervall [t1,t2],

Fig. 4b eine für einen spezifikationsgemäßen Betrieb des Hydrospeichers vorgegebene Ladedruckkennlinie p_a(V_a),

Fig. 5 einen Betriebszustand der Anordnung gemäß Fig. 1 nach Abschluss des Ladevorgangs,

Fig. 6 ein Betriebszustand der Anordnung gemäß Fig. 1 bei erkannter Funktionsbeeinträchtigung oder Ausfall der primären Hydraulikversorgung des landwirtschaftlichen Traktors, und

Fig. 7 eine Abwandlung der in Fig. 1 dargestellten Anordnung zur Durchführung des erfindungsgemäßen Verfahrens.

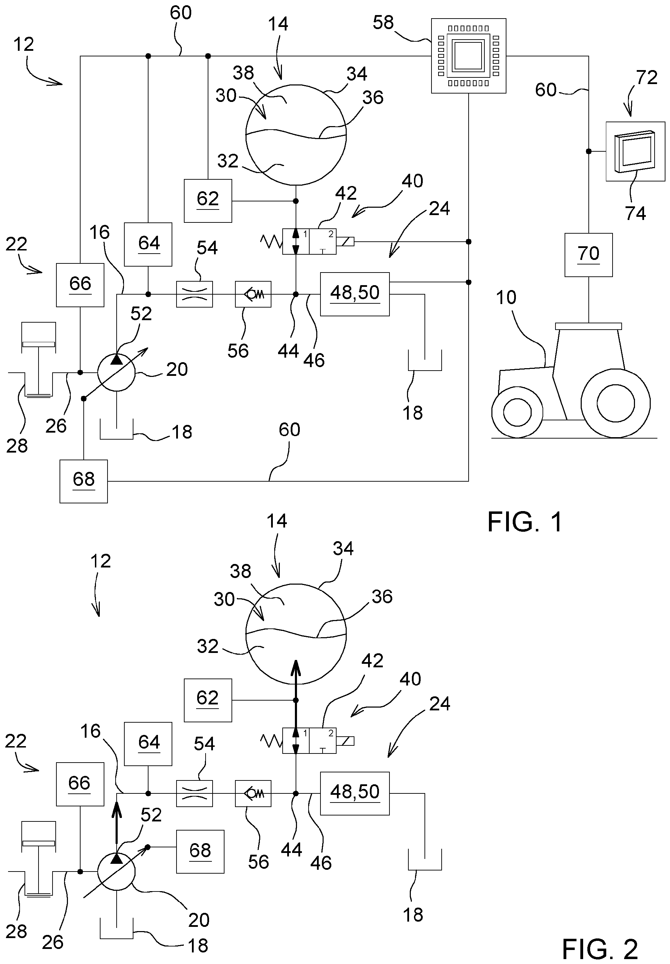

Fig. 1 zeigt eine schematisch dargestellte Anordnung, anhand derer die Funktionsweise des erfindungsgemäßen Verfahrens zur Zustandsüberprüfung eines Hydrospeichers veranschaulicht werden soll.

Die in einem landwirtschaftlichen Traktor 10 befindliche Anordnung 12 umfasst einen Hydrospeicher 14, der über eine Zuleitung 16 mit unter Druck stehender Hydraulikflüssigkeit beaufschlagt werden kann, die mittels einer aus einem Hydraulikreservoir 18 gespeisten Verschwenkpumpe 20 erzeugt wird. Die Verschwenkpumpe 20 ist Bestandteil eines in dem landwirtschaftlichen Traktor 10 angeordneten Hydrauliksystems 22 und dient dort der Hydraulikversorgung einer Vielzahl von hydraulischen Verbrauchern 24. Hierzu wird die Verschwenkpumpe 20 über einen Zahnradantrieb 26 mittels eines von dem landwirtschaftlichen Traktor 10 umfassten Verbrennungsmotors 28 in Drehung versetzt.

Der Hydrospeicher 14 weist eine entgegen der Wirkung eines Kompressionsmittels 30 druckvorspannbare Flüssigkeitskammer 32 auf, die der reversiblen Speicherung hydraulischer Energie dient. Beispielsgemäß ist der Hydrospeicher 14 als Membranspeicher 34 ausgebildet, bei dem das Kompressionsmittel 30 durch eine elastische Membran 36 aus Metall oder einem Elastomer gebildet ist, die sich beim Befüllen der Flüssigkeitskammer 32 entgegen der rückstellenden Wirkung eines kompressiblen Gases 38, hier Stickstoff, auslenken lässt. Anstelle eines Membranspeichers 34 kann es sich jedoch auch um einen Blasenspeicher oder einen Kolbenspeicher handeln.

Eine mit der Flüssigkeitskammer 32 verbundene Ventileinrichtung 40 in Gestalt eines 2/2-Wegeventils 42 kommuniziert über eine T-Abzweigung 44 einerseits mit der von der Verschwenkpumpe 20 kommenden Zuleitung 16 und andererseits mit einer Speiseleitung 46 zur Versorgung ausgewählter hydraulischer Verbraucher 24, hier einer hydraulischen Bremsanlage 48 und/oder einer hydrostatischen Fahrzeuglenkung 50. In der Zuleitung 16 zwischen einem Förderausgang 52 der Verschwenkpumpe 20 und der T-Abzweigung 44 befindet sich eine Hydraulikblende 54, gefolgt durch ein in Füllrichtung des Hydrospeichers 14 durchlässiges Rückschlagventil 56. Das 2/2-Wegeventil 42 lässt sich von einer Kontrolleinheit 58 über einen CAN-Datenbus 60 elektrisch betätigen.

Wie in Fig. 1 ebenfalls erkennbar ist, ist ein Drucksensor 62 zur Erfassung eines Ladedrucks p_a in der Flüssigkeitskammer 32 des Hydrospeichers 14, ein weiterer Drucksensor 64 zur Erfassung eines Förderdrucks p_p am Förderausgang 52 der Verschwenkpumpe 20, ferner ein Drehzahlsensor 66 bzw. Schwenkwinkelsensor 68 zur sensorischen Erfassung einer Pumpendrehzahl N1 bzw. eines Schwenkwinkels β der Verschwenkpumpe 20 vorhanden. Die entsprechenden Sensordaten werden über den CAN-Datenbus 60 an die Kontrolleinheit 58 weitergegeben.

Ferner ist es der Kontrolleinheit 58 möglich, über den CAN-Datenbus 60 in ein Antriebsmanagementsystem 70 des landwirtschaftlichen Traktors 10 einzugreifen. Eine Nutzerschnittstelle 72 erlaubt zudem die Ausgabe von Fahrerinformationen über ein zugehöriges Display 74.

Fig. 2 zeigt einen Betriebszustand der Anordnung 12 während der Durchführung eines Ladevorgangs des Hydrospeichers 14. Die Befüllung des noch leeren bzw. gegebenenfalls zuvor gezielt entleerten Hydrospeichers 14 erfolgt mit Inbetriebnahme des landwirtschaftlichen Traktors 10, also beim Anlassen des Verbrennungsmotors 28.

Während des Ladevorgangs erfolgt eine Zustandsüberwachung des Hydrospeichers 14, wobei diese durch zwei unterschiedliche Vorgehensweisen gekennzeichnet ist:

**(i) Bewertung der Ladeenergie**

Eine erste Vorgehensweise sieht vor, dass der Hydrospeicher 14 auf Veranlassung der Kontrolleinheit 58 durch Öffnen des 2/2-Wegeventils 42 bis zum Erreichen eines vorgegebenen Soll-Ladedrucks p_target mit unter Druck stehender Hydraulikflüssigkeit aus der Verschwenkpumpe 20 befüllt wird, wobei die beim Befüllen aufgewandte Ladeenergie E_a von der Kontrolleinheit 58 durch zeitliche Integration des Produkts aus sensorisch erfasstem Ladedruck p_a und Ladevolumenstrom V_flow berechnet und mit einer vorgegebenen Mindest-Ladeenergie min_E_a verglichen wird, um bei Nichterreichen der vorgegebenen Mindest-Ladeenergie min_E_a auf eine Fehlfunktion des Hydrospeichers 14 zu schließen.

Der Ladevolumenstrom V_flow wird von der Kontrolleinheit 58 entweder ausgehend von der sensorisch erfassten Pumpendrehzahl N1 nach Maßgabe des sich aus einem sensorisch erfassten Schwenkwinkel β ergebenden Verdrängungsvolumenstroms V1 der Verschwenkpumpe 20 pro Umdrehung berechnet,

$$V\_flow = N1*V1 \ ,$$

wobei dies unter der Annahme erfolgt, dass in Richtung der hydraulischen Verbraucher 24 abfallende Volumenstromanteile bekannt oder vernachlässigbar klein sind. Alternativ erfolgt die Berechnung des Ladevolumenstroms V_flow von der Kontrolleinheit nach Maßgabe eines sensorisch erfassten Druckabfalls p_a-p_p, der an der Hydraulikblende 54 auftritt, durch die die unter Druck stehende Hydraulikflüssigkeit beim Befüllen der Flüssigkeitskammer 32 hindurchströmt. Die Hydraulikblende 54 wird eingangsseitig mit dem Förderdruck p_p der Verschwenkpumpe 20 beaufschlagt, wohingegen ausgangsseitig der in der Flüssigkeitskammer 32 des Hydrospeichers 14 herrschende Ladedruck p_a anliegt,

$$V\_flow = (p\_p-p\_a)*k \ ,$$

wobei k eine für die betreffende Hydraulikblende 54 charakteristische Konstante ist, die unter anderem von der Betriebstemperatur der hindurchtretenden Hydraulikflüssigkeit abhängt.

Ob der vorgegebene Soll-Ladedruck p_target erreicht ist, erkennt die Kontrolleinheit 58 durch Überwachung des sensorisch erfassten Ladedrucks p_a. Die beim Befüllen aufgewandte Ladeenergie E_a ergibt sich dabei zu

$$E\_a = \int_{t1}^{t2} p\_a * V\_flow * dt \ ,$$

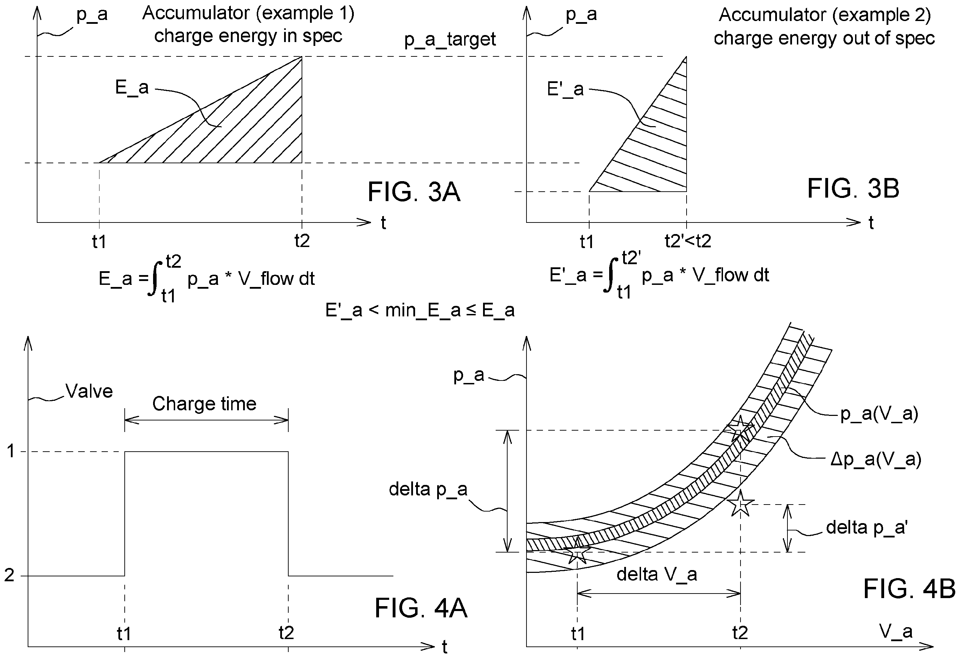

wobei eine zeitliche Integration über das Füllzeitintervall [t1, t2] durchgeführt wird. Dies ist in Fig. 3a bzw. 3b für den Fall veranschaulicht, dass die Mindest-Ladeenergie min_E_a erreicht bzw. nicht erreicht wird, wobei die schraffierte Fläche jeweils die beim Befüllen des Hydrospeichers 14 aufgewandte Ladeenergie E_a bzw. E'_a repräsentiert.

**(ii) Einhaltung der Ladekennlinie**

Eine zweite Vorgehensweise sieht vor, dass der Hydrospeicher 14 auf Veranlassung der Kontrolleinheit 58 durch Öffnen des 2/2-Wegeventils 42 für ein vorgegebenes Füllzeitintervall [t1, t2] entsprechend Fig. 4a mit unter Druck stehender Hydraulikflüssigkeit aus der Verschwenkpumpe 20 befüllt wird, wobei eine dabei auftretende Druckdifferenz delta p_a in der Flüssigkeitskammer 32 im Verhältnis zu einem zugeführten Ladevolumen delta V_a erfasst und von der Kontrolleinheit 58 hinsichtlich der Übereinstimmung mit einer für einen spezifikationsgemäßen Betrieb des Hydrospeichers 14 vorgegebenen Ladedruckkennlinie p_a(V_a) verglichen wird, um bei mangelnder Übereinstimmung auf eine Fehlfunktion des Hydrospeichers 14 zu schließen. Letzteres ist in Fig. 4b durch das abweichende Wertepaar (delta p_a', delta V_a) veranschaulicht.

Somit wird von der Kontrolleinheit 58 eine Bewertung dahingehend vorgenommen, ob sich das ermittelte Wertepaar (delta p_a, delta V_a) innerhalb eines zulässigen Toleranzbereichs Δp_a(V_a) entlang der vorgegebenen Ladedruckkennlinie p_a(V_a) entsprechend einordnen lässt (siehe Fig. 4b). Ist dies der Fall, so ist von einer ordnungsgemäßen Funktion des Hydrospeichers 14 auszugehen. Das zugeführte Ladevolumen delta V_a ergibt sich hierbei aus der Dauer der Füllzeit t2-t1 bei als bekannt vorausgesetzten und für eine gegebene Betriebstemperatur der Hydraulikflüssigkeit als konstant angenommenen Ladevolumenstrom V_flow.

Die vorgegebene Mindest-Ladeenergie min_E_a bzw. die vorgegebene Ladedruckkennlinie p_a(V_a) ist je nach verwendetem Hydrospeicher 14 unterschiedlich und ergibt sich letztlich aus den jeweiligen Spezifikationen des Herstellers.

Im Ergebnis erlaubt es jede der beiden Vorgehensweisen (i) und (ii) auf unterschiedlichen Wegen, eine Degradation der Energiespeicherkapazität des Hydrospeichers 14 frühzeitig und verlässlich zu erkennen.

Es ist vorgesehen, dass die Kontrolleinheit 58 eine Inbetriebnahme des landwirtschaftlichen Traktors 10 bei erkannter Fehlfunktion des Hydrospeichers 14 durch Eingreifen in das Antriebsmanagementsystem 70 unterbindet oder allenfalls mit reduzierter Fahrtgeschwindigkeit zulässt. Dies trägt vor allem Umständen Rechnung, in denen der Hydrospeicher 14 der redundanten Absicherung der Hydraulikversorgung kritischer hydraulischer Funktionen, wie hier der hydraulischen Bremsanlage 48 und/oder der hydrostatischen Fahrzeuglenkung 50, dient.

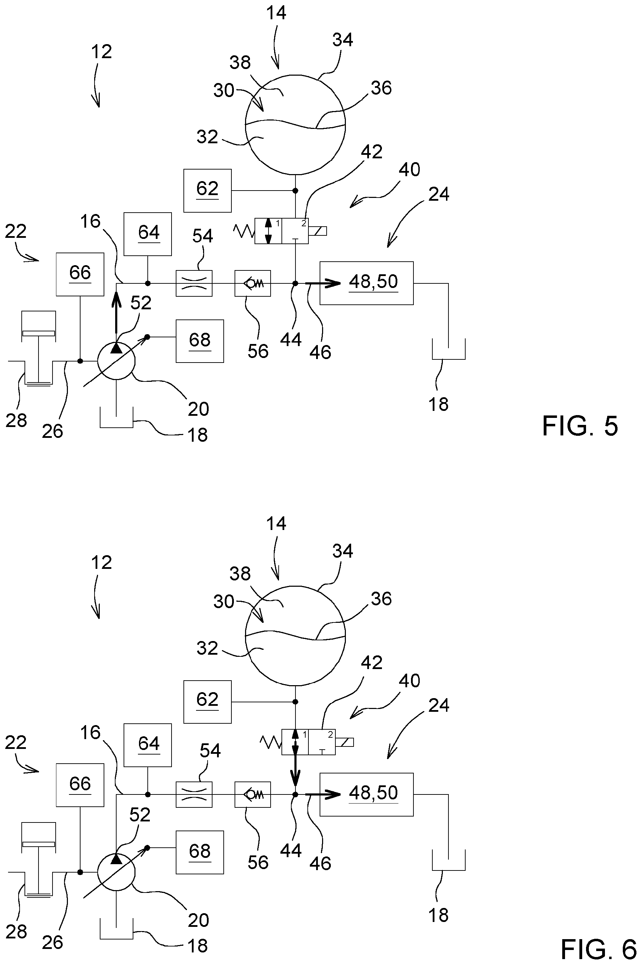

Mit Abschluss des Ladevorgangs wird die dem Hydrospeicher 14 zugeführte Hydraulikflüssigkeit jeweils durch Sperren des 2/2-Wegeventils 42 in der Flüssigkeitskammer 32 eingeschlossen. Entsprechend Fig. 5 erfolgt die Hydraulikversorgung der hydraulischen Bremsanlage 48 und/oder hydrostatischen Fahrzeuglenkung 50 dann ausschließlich seitens der Verschwenkpumpe 20.

In diesem Betriebszustand wird zusätzlich der Hydraulikdruck der eingespeicherten Hydraulikflüssigkeit von der Kontrolleinheit 58 hinsichtlich der Einhaltung eines vorgegebenen Mindest-Systemdrucks min_p_a überwacht, um bei Unterschreiten des vorgegebenen Mindest-Systemdrucks min_p_a den landwirtschaftlichen Traktor 10 in einen Notbetriebsmodus zu versetzen. Der durch entsprechendes Eingreifen in das Antriebsmanagementsystem 70 ausgeführte Notbetriebsmodus sieht entweder eine Begrenzung der Fahrtgeschwindigkeit des landwirtschaftlichen Traktors 10 zum Zwecke der Verwirklichung einer Schleichfahrt, die eine sichere Heimkehr auf einen Betriebshof oder in eine Werkstatt erlaubt, oder aber einen vollständigen Fahrtstopp vor. Der Hydraulikdruck der eingespeicherten Hydraulikflüssigkeit ist vorliegend mit dem sensorisch erfassten Ladedruck p_a identisch.

Bei erkannter Funktionsbeeinträchtigung oder Ausfall der durch die Verschwenkpumpe 20 gebildeten primären Hydraulikversorgung des landwirtschaftlichen Traktors 10 wird die eingespeicherte Hydraulikflüssigkeit durch Öffnen des 2/2-Wegeventils 42 zum Betrieb der hydraulischen Bremsanlage 48 und/oder hydrostatischen Fahrzeuglenkung 50 herangezogen (siehe Fig. 6). Hierbei wird die gespeicherte hydraulischer Energie sukzessive abgegebene. Ein unerwünschter Rückfluss von Hydraulikflüssigkeit in Richtung der defekten Verschwenkpumpe 20 wird mittels des Rückschlagventils 56 unterbunden. Auf diese Weise bleibt die Manövrierbarkeit des landwirtschaftlichen Traktors 10 zumindest für einen gewissen Zeitraum, sodass der Fahrer die Möglichkeit hat, diesen an geeigneter Stelle sicher zum Stillstand zu bringen.

Ergänzend erfolgt bei Erkennung einer Fehlfunktion des Hydrospeichers 14 wie auch bei einer Funktionsbeeinträchtigung oder einem Ausfall der durch die Verschwenkpumpe 20 gebildeten primären Hydraulikversorgung des landwirtschaftlichen Traktors 10 die Ausgabe einer geeigneten Fahrerinformation über die mit der Kontrolleinheit 58 in Verbindung stehende Nutzerschnittstelle 72 bzw. das von dieser umfasste Display 74. Entsprechendes gilt für den Fall der Auslösung des Notbetriebsmodus.

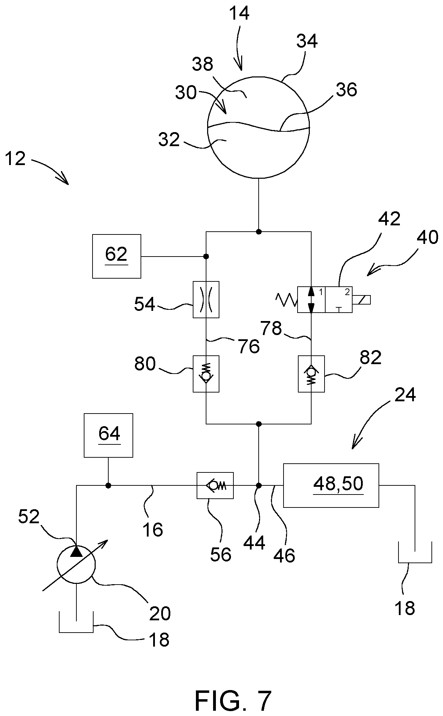

In Fig. 7 ist eine Abwandlung der Anordnung 12 zur Durchführung des erfindungsgemäßen Verfahrens dargestellt. Diese Ausführung unterscheidet sich von derjenigen in Fig. 1 hinsichtlich der Lage der Hydraulikblende 54, die sich hier in einer separaten Ladeleitung 76 befindet, die von der T-Abzweigung 44 in Richtung des Hydrospeichers 14 verläuft. Neben dem in einer Entladeleitung 78 angeordneten 2/2-Wegevenil 42 sind zwei weitere Rückschlagventile 80, 82 vorgesehen, die sicherstellen, dass ein Hydraulikfluss beim Befüllen bzw. Entladen des Hydrospeichers 14 ausschließlich auf die hierfür vorgesehene Leitung 76, 78 beschränkt ist.

Der Vollständigkeit halber sei angemerkt, dass sich das erfindungsgemäße Verfahren zur Zustandsüberprüfung beliebiger Hydrospeicher eignet, diese müssen nicht zwingend Bestandteil eines Hydrauliksystems in einem Fahrzeug sein. Auch soll die Darstellung eines landwirtschaftlichen Traktors 10 lediglich repräsentativ für land- und forstwirtschaftliche Fahrzeuge beliebigen Typs sein. Auch kann es sich um ein Baufahrzeug oder eine stationäre Anwendung handeln.

**Patentansprüche**

1.  Verfahren zur Zustandsüberprüfung eines Hydrospeichers, der eine entgegen der Wirkung eines Kompressionsmittels (30) druckvorspannbare Flüssigkeitskammer (32) zur reversiblen Speicherung hydraulischer Energie aufweist, wobei die Flüssigkeitskammer (32) während eines Ladevorgangs des Hydrospeichers (14) auf Veranlassung einer Kontrolleinheit (58)

    (i) bis zum Erreichen eines vorgegebenen Soll-Ladedrucks (p_target) mit unter Druck stehender Hydraulikflüssigkeit befüllt wird, wobei die beim Befüllen aufgewandte Ladeenergie (E_a) von der Kontrolleinheit (58) durch zeitliche Integration des Produkts aus sensorisch erfasstem Ladedruck (p_a) und Ladevolumenstrom (V_flow) berechnet und mit einer vorgegebenen Mindest-Ladeenergie (min_E_a) verglichen wird, um bei Nichterreichen der vorgegebenen Mindest-Ladeenergie (min_E_a) auf eine Fehlfunktion des Hydrospeichers (14) zu schließen, und/oder

    (ii) für ein vorgegebenes Füllzeitintervall ([t1, t2]) mit unter Druck stehender Hydraulikflüssigkeit befüllt wird, wobei eine dabei auftretende Druckdifferenz delta (p_a) in der Flüssigkeitskammer (32) im Verhältnis zu einem zugeführten Ladevolumen (delta V_a) erfasst und von der Kontrolleinheit (58) hinsichtlich der Übereinstimmung mit einer für einen spezifikationsgemäßen Betrieb des Hydrospeichers (14) vorgegebenen Ladedruckkennlinie (p_a(V_a)) verglichen wird, um bei mangelnder Übereinstimmung auf eine Fehlfunktion des Hydrospeichers (14) zu schließen.

**2.** Verfahren nach Anspruch 1, **dadurch gekennzeichnet, dass** die unter Druck stehende Hydraulikflüssigkeit mittels einer aus einem Hydraulikreservoir (18) gespeisten Verschwenkpumpe (20) erzeugt wird.

**3.** Verfahren nach Anspruch 2, **dadurch gekennzeichnet, dass** der Ladevolumenstrom (V_flow) von der Kontrolleinheit (58) ausgehend von einer sensorisch erfassten Pumpendrehzahl (N1) nach Maßgabe eines sich aus einem sensorisch erfassten Schwenkwinkel (β) ergebenden Verdrängungsvolumenstroms (V1) der Verschwenkpumpe (20) pro Umdrehung berechnet wird.

**4.** Verfahren nach Anspruch 1 oder 2, **dadurch gekennzeichnet, dass** der Ladevolumenstrom (V_flow) von der Kontrolleinheit (58) nach Maßgabe eines sensorisch erfassten Druckabfalls (p_a-p_p) berechnet wird, der an einer Hydraulikblende (54) auftritt, durch die die unter Druck stehende Hydraulikflüssigkeit beim Befüllen der Flüssigkeitskammer (32) hindurchströmt.

**5.** Verfahren nach wenigstens einem der vorhergehenden Ansprüche, dass der Hydrospeicher (14) von einem Hydrauliksystem (22) eines land- oder forstwirtschaftlichen Fahrzeugs (10) umfasst ist, wobei die Kontrolleinheit (58) eine Inbetriebnahme des land- oder forstwirtschaftlichen Fahrzeugs (10) bei erkannter Fehlfunktion des Hydrospeichers (14) durch Eingreifen in ein Antriebsmanagementsystem (70) unterbindet Antriebsmanagementsystem unterbindet oder mit reduzierter Fahrtgeschwindigkeit zulässt.

**6.** Verfahren nach wenigstens einem der vorhergehenden Ansprüche, **dadurch gekennzeichnet, dass** mit Abschluss des Ladevorgangs die dem Hydrospeicher (14) zugeführte Hydraulikflüssigkeit durch Schließen einer Ventileinrichtung (40) in der Flüssigkeitskammer (32) eingespeichert wird.

**7.** Verfahren nach Anspruch 6, **dadurch gekennzeichnet, dass** der Hydrospeicher (14) Bestandteil eines Hydrauliksystems (22) eines land- oder forstwirtschaftlichen Fahrzeugs (10) ist, wobei der Hydraulikdruck der eingespeicherten Hydraulikflüssigkeit von der Kontrolleinheit (58) hinsichtlich der Einhaltung eines vorgegebenen Mindest-Systemdrucks (min_p_a) überwacht wird, um bei Unterschreiten des vorgegebenen Mindest-Systemdrucks (min_p_a) das landoder forstwirtschaftliche Fahrzeug (10) in einen Notbetriebsmodus zu versetzen.

**8.** Verfahren nach Anspruch 6, **dadurch gekennzeichnet, dass** bei erkannter Funktionsbeeinträchtigung oder Ausfall einer primären Hydraulikversorgung (20) die eingespeicherte Hydraulikflüssigkeit durch Öffnen der Ventileinrichtung (40) zum Betrieb ausgewählter hydraulischer Verbraucher (24) eines land- oder forstwirtschaftlichen Fahrzeugs (10), insbesondere einer hydraulischen Bremsanlage (48) und/oder einer hydrostatischen Fahrzeuglenkung (50), herangezogen wird.

FIG. 1

FIG. 2

p_a    Accumulator (example 1)
       charge energy in spec

p_a_target

E_a

FIG. 3A

t1          t2          t

$$E\_a = \int_{t1}^{t2} p\_a * V\_flow \; dt$$

p_a    Accumulator (example 2)
       charge energy out of spec

E'_a

FIG. 3B

t1    t2'<t2    t

$$E'\_a = \int_{t1}^{t2'} p\_a * V\_flow \; dt$$

$$E'\_a < min\_E\_a \le E\_a$$

Valve

Charge time

1

2

FIG. 4A

t1          t2          t

p_a

p_a(V_a)

Δp_a(V_a)

delta p_a

delta p_a'

delta V_a

FIG. 4B

t1          t2          V_a

FIG. 5

FIG. 6

FIG. 7

**EP 4 614 007 A1**

Europäisches
Patentamt
European
Patent Office
Office européen
des brevets

# EUROPÄISCHER RECHERCHENBERICHT

Nummer der Anmeldung

EP 24 16 1858

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 059400 A1 (BOSCH GMBH ROBERT [DE]) 18. Juni 2009 (2009-06-18) * Absätze [0047] - [0050]; Abbildung 5 * ----- | 1-8 | INV. F15B1/08 F15B19/00 F15B1/033 |
| X | AT 522 380 A1 (ENGEL AUSTRIA GMBH [AT]) 15. Oktober 2020 (2020-10-15) * Seite 11, Absatz 2 - Seite 14, Absatz 3 * ----- | 1-3 | |
| A | US 2023/311796 A1 (LETSCHER JENS [DE]) 5. Oktober 2023 (2023-10-05) * Absätze [0034], [0038], [0058] * ----- | 5,7,8 | |
| A | DE 10 2013 200444 A1 (BOSCH GMBH ROBERT [DE]) 17. Juli 2014 (2014-07-17) * Absätze [0042] - [0047] * ----- | 1 | |
| A | DE 29 06 897 A1 (BOSCH GMBH ROBERT) 4. September 1980 (1980-09-04) * Seite 7, Absatz 1 - Seite 8, Absatz 4 * ----- | 1 | |

RECHERCHIERTE
SACHGEBIETE (IPC)

F15B

Der vorliegende Recherchenbericht wurde für alle Patentansprüche erstellt

| Recherchenort | Abschlußdatum der Recherche | Prüfer |
|---|---|---|
| München | 22. Juli 2024 | Toffolo, Olivier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 4 614 007 A1**

## ANHANG ZUM EUROPÄISCHEN RECHERCHENBERICHT
## ÜBER DIE EUROPÄISCHE PATENTANMELDUNG NR.

EP 24 16 1858

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2024

| Im Recherchenbericht angeführtes Patentdokument | Datum der Veröffentlichung | Mitglied(er) der Patentfamilie | Datum der Veröffentlichung |
|---|---|---|---|
| DE 102007059400 A1 | 18-06-2009 | KEINE | |
| AT 522380 A1 | 15-10-2020 | KEINE | |
| US 2023311796 A1 | 05-10-2023 | DE 102022107684 A1<br>EP 4253765 A2<br>US 2023311796 A1 | 05-10-2023<br>04-10-2023<br>05-10-2023 |
| DE 102013200444 A1 | 17-07-2014 | KEINE | |
| DE 2906897 A1 | 04-09-1980 | DE 2906897 A1<br>GB 2042645 A | 04-09-1980<br>24-09-1980 |

Für nähere Einzelheiten zu diesem Anhang : siehe Amtsblatt des Europäischen Patentamts, Nr.12/82